# EUROPEAN PATENT SPECIFICATION

(11) **EP 1 595 361 B1**
(45) Date of publication and mention of the grant of the patent: **22.09.2010**
(21) Application number: 04708366.2
(22) Date of filing: 05.02.2004
(51) Int. Cl.: H04W 72/12

(54) **SCHEDULING OF SIGNALING MESSAGES IN A WIRELESS TDMA-BASED COMMUNICATION SYSTEM**
ABLAUFPLANUNG FÜR SIGNALISIERUNGSNACHRICHTEN IN EINEM DRAHTLOSEN TDMA-KOMMUNIKATIONSSYSTEM
ORDONNANCEMENT DE MESSAGES DE CONTROLE DANS UN SYSTÈME DE COMMUNICATION SANS FIL AMRT

(30) Priority: 08.02.2003 GB 0302903
(43) Date of publication of application: 16.11.2005
(73) Proprietor: MOTOROLA, INC., Schaumburg, IL 60196 (US)
(72) Inventor: JAKOBSEN, Ken Motorola A/S, DK-2660 Glostrup (DK)
(74) Representative: McCormack, Derek James
(86) International application number: PCT/EP2004/050089
(87) International publication number: WO 2004/071018

(56) References cited:
- EP-A- 1 076 439
- EP-A- 1 223 775
- WO-A-98/52325

## Description

### Field of the Invention

This invention relates to communication systems and apparatus and methods for use therein. In particular, the invention relates to signalling message scheduling in a wireless communication system. The invention is applicable to, but not limited to, signalling message scheduling in a radio communication system supporting packet data communication, e.g. a TETRA (TErrestrial Trunked Radio) network.

### Background of the Invention

Wireless communication systems, for example cellular telephony or private mobile radio communication systems, typically provide for radio telecommunication links to be arranged between a system infrastructure including a plurality of base transceiver stations (BTSs) and a plurality of subscriber units or terminals, often termed mobile stations (MSs).

Methods for communicating information simultaneously in a wireless communication network exist where communication resources are shared by a number of users. Such methods are termed multiple access techniques. A number of multiple access techniques exist, whereby a finite communication resource is divided into any number of physical parameters, such as:
(i) Frequency division multiple access (FDMA) whereby the total number of frequencies used in the communication system are shared,
(ii) Time division multiple access (TDMA) whereby each communication resource, say a frequency used in the communication system, is shared amongst users by dividing the resource into a number of distinct time periods (time-slots, frames, etc.), and
(iii) Code division multiple access (CDMA) whereby communication is performed by using all of the respective frequencies, in all of the time periods, and the resource is shared by allocating each communication a particular code, to differentiate desired signals from undesired signals.

Within such multiple access techniques, different duplex (two-way communication) paths are arranged. Such paths can be arranged in a frequency division duplex (FDD) configuration, whereby a frequency is dedicated for up-link communication, i.e. from a MS to its serving BTS and a second frequency is dedicated for downlink communication, i.e. from a serving BTS to one or more MS. Alternatively, the paths can be arranged in a time division duplex (TDD) configuration, whereby a first time period is dedicated for up-link communication and a second time period is dedicated for downlink communication.

An example of a zone/cell-based wireless communication system is a TETRA (TErrestrial Trunked Radio) system, which is a system operating according to TETRA standards or protocols as defined by the European Telecommunications Standards Institute (ETSI). A primary focus for TETRA equipment is use by the emergency services, as TETRA provides dispatch and control services. The system infrastructure in a TETRA system is generally referred to as a switching and management infrastructure (SwMI), which substantially contains all of the communication elements apart from the MSs. This includes base transceiver stations (BTSs) connected to a conventional public-switched telephone network (PSTN) through base station controllers (BSCs) and mobile switching centres (MSCs).

The communication network may provide radio communications between the infrastructure and MSs (or between MSs via the infrastructure) of information in any of the known forms in which such communications are possible. In particular, information may represent speech, sound, data, picture or video information. Data information is usually digital information representing written words, numbers etc, i.e. the type of user information processed in a personal computer. In addition, signalling messages are communicated. These are messages relating to the communication system itself, e.g. to control the manner in which user information is communicated in compliance with the selected industry protocol such as TETRA. Different channels may be used for communication of the different forms of information.

For data to be transferred across communication networks via a data communication channel, a communication terminal addressing protocol is required. The communication units are generally allocated addresses that are read by a communication bridge, gateway and/or router, in order to determine how to transfer the data to the addressed destination communication unit. Such data transfer needs to be effectively and efficiently provided for, in order to optimise use of limited communication resources. Currently, the most popular protocol used to transfer data in communications systems is the Internet Protocol (IP).

The Internet Protocol adds a data header on to the information passed from the transport layer. The resultant data packet is known as an Internet datagram. The header of the datagram contains information such as destination and source IP addresses, the version number of the IP protocol etc. Each exchange of data typically consists of sending one or more data packets on an uplink channel and one or more data packets on a downlink channel. A Packet Data CHannel (PDCH) in a TETRA network can serve several MSs at the same time.

In this regard, the resources of the PDCH are then shared between the MSs on the channel on a statistical multiplex basis. This enables the air interface resources to be used in an optimal manner.

The TETRA known signalling procedure, used for accessing the PDCH, requires a MS firstly to request access to the PDCH via the main control channel (MCCH) on which control signalling messages are mainly sent. Following access approval by the SwMI and sending of an appropriate signalling message to the MS, the MS is then moved by receipt of the signalling message to the PDCH, where data packets are exchanged.

To enable multiple packets to be exchanged, a hang timer (termed a 'READY' timer in TETRA parlance) is set, at the end of a given data packet transfer, in both the SwMI and the particular MS. The hang timer effectively keeps the MS on the PDCH for a period of time after the last data packet has been exchanged.

Thus, if the timer expires before any further data packets are sent in either direction, the SwMI recognises that the data exchange has finished. Once a processor within the SwMI has sensed this condition, i.e. the SwMI senses that the READY timer has expired, and an end-of- data signalling message is generated for sending to the MS. A plurality of such 'end-of-data' messages are generated and are assigned a fixed priority and sent on the air interface to the appropriate MSs whenever resources are available. By sending the end-of-data message (s) from the SwMI to the MS(s) via the appropriate BTSs of the MSs, the MSs are instructed to return to their respective MCCH. This known procedure causes each of the relevant MSs automatically to switch its receive and transmit channels to the main control channel(s), where it waits until it has to be involved in another communication, e.g. a voice or data traffic communication. The actual message sent to the MS(s) is an "SN-END-OF-DATA" message, as defined in clause 28.4.4.3 in the TETRA standard. The message contains the MS destination address (the so called 'ITSI' or individual TETRA subscriber identity) and the message type.

In TETRA packet data communication, physical data channels carry both system control signalling and data payload (user communicated information). These two types of traffic may be given different priorities, with control signalling usually being allocated a higher priority. In the known TETRA procedure, each end-of-data message to be transmitted by the SwMI is put into a queue. The signals are sent to the respective MSs one by one in available, individual timeslots, which may be either a signalling control timeslot or a payload data timeslot.

Notably, as illustrated later, each of the end-of-data messages is sent in a separate timeslot, even though the end-of-data message length itself is very short and consumes only a fraction of a timeslot. The rest of.the timeslot therefore remains unused. Furthermore, as timers run in both the SwMI and the MS, the transmission of the end-of-data message has to be performed with a relatively high priority, so that the downlink data transfer does not delay the delivery of the message too long.

In a typical practical situation, the application that requests a PDCH access will be a transaction-based application. That is, the application will send a request to a server, and shortly afterwards will receive a reply from the server. This means that the time it takes to perform a typical PDCH access is often relatively short, involving only two transferred data messages. Since applications using wireless services tend to be optimised (i.e. the applications use small packets), a typical operational scenario is that the applications transfer messages of around fifty bytes of data in length inbound followed by two hundred bytes of data outbound. In the case of TETRA communication, the downlink data message requires nine TETRA timeslots to be transferred.

In attempting to optimise the communication resources, these nine timeslots for the data transfer must be compared to the resources used to send the MS back to the MCCH. As the message used for this contains a channel allocation element, it is sent unacknowledged using a basic link. Thus, in practice, the signalling message is typically sent repeatedly to the MS until an 'acknowledgement' (ack) is received back. The message may be repeated a fixed number, say three or four, times to achieve a reliability of transmission. This means that this procedure to return the MS to the MCCH often uses three or four timeslots, which is relatively high compared to the nine timeslots used for the data packet itself. Thus, overall, a large number of timeslots are consumed by sending the end-of-data messages in the known procedure. This can become a serious drain on the available resources of the system.

Due to the way the READY timer works (i.e. it is reset after every packet data transfer), the timer will typically never expire at the same time for two MSs. This means that the downlink usage will truly be nine plus four timeslots.

The inventor has recognised therefore that a need exists for an improved scheduling procedure and apparatus for using the same wherein the abovementioned disadvantages may be alleviated.

EP-A-1,076,439 describes a scheduling controller and method for use in a system which uses dynamic slot assignment for time division multiple access (TDMA). Processing requests for data transmission are received by a base station from terminals which communicate with the base station. The scheduler allocates time slots to each TDMA frame according to the types and numbers of various processing requests which have been buffered. Slot positions and a slot length represented by the number of slots required to communicate data are controlled by the scheduler for each frame. The method described is quite different from the methods used in systems such as TETRA systems as defined herein which employ a fixed number of slots of equal length per frame.

EP-A-1,223,775 describes a method of waking wireless terminals from a standby mode to indicate that there is a paging message for the terminal. The reference describes the method as being useful in an OFDM system. The existence of paging messages is indicated in signals sent in short time slots to target terminals. Paging messages are subsequently sent to the target terminals in longer time slots. Each terminal has to wake from the standby mode to check if there is a signal indicating the existence of a paging signal. If there is no paging signal the terminal can go back into standby mode; only a short period is needed to check if there is a paging message compared with the time required to receive the paging message where one exists. The method described is not suitable for use in systems such as TETRA systems as defined herein which employ a fixed number of slots of equal length per frame.

### Summary of the invention

In accordance with a first aspect of the present invention, there is provided a wireless communication system, as claimed in Claim 1.

In accordance with a second aspect of the present invention, there is provided a network processor, as claimed in Claim 12.

In accordance with a third aspect of the present invention, there is provided a method of operation as claimed in Claim 13.

In accordance with a fourth aspect of the present invention, there is provided a storage medium, as claimed in Claim 14.

Further features of the present invention are defined in the dependent Claims.

In summary, an embodiment of the present invention proposes a procedure that will increase the probability of being able to send multiple control signalling messages, and in particular send multiple end-of-data messages within control signalling messages, within the same air-interface timeslot.

Embodiments of the present invention will now be described by way of example only, with reference to the accompanying drawings, in which:

### Brief Description of the accompanying drawings

FIG. 1 is a timing diagram of a known scheduling operation used in a TETRA communication system.
FIG. 2 is a schematic block diagram of a trunked radio communication system that can be adapted to support the various inventive concepts of an embodiment of the present invention; and
FIG. 3 is a timing diagram of a scheduling operation in accordance with an embodiment of the present invention.

### Description of embodiments of the invention

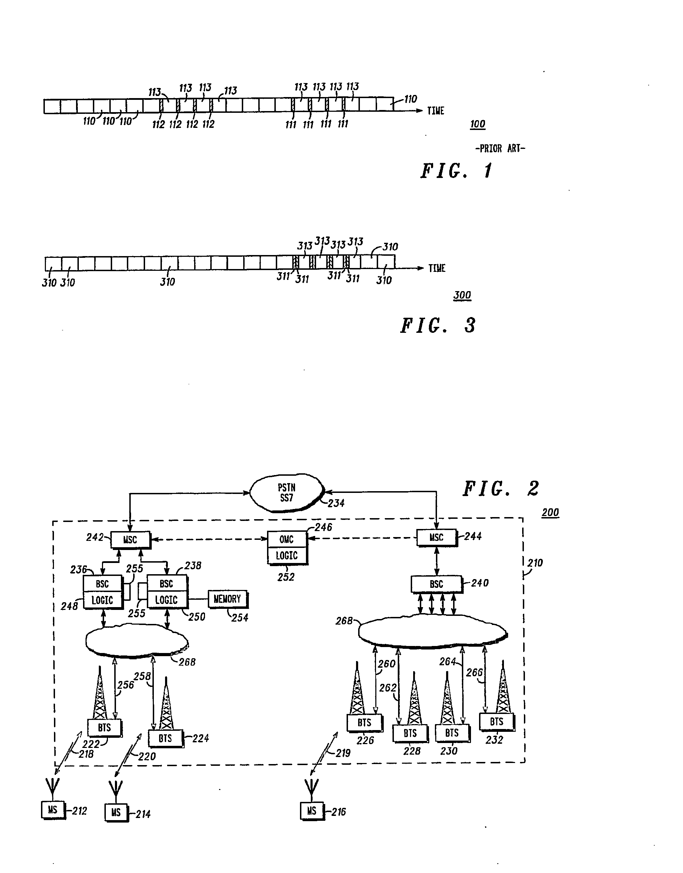

A known process used in a TETRA system to return MSs which have ended data communication from the PDCH channel to the MCCH is illustrated in FIG. 1. FIG. 1 shows a sequence 100 of twenty one timeslots 110 in the TETRA TDMA structure. The timeslots 110 may be used to send payload data or control signalling messages.

A scheduler (not shown) collects and forms a queue of end-of-data control signalling messages 111 to be sent to specific target MSs (not shown). The end-of-data messages 111 are sent to the respective MSs one by one in available, individual timeslots 110. As shown in FIG. 1, a first set of end-of-data messages consists of four consecutive messages 111 and a second set of end-of-data messages consists of four consecutive messages 112. Each message 111 or 112 is inserted into its own timeslot 110. Each timeslot 110 in which such a message is inserted has an unused portion 113. The remaining thirteen timeslots 110 not containing signalling messages are available to be used to carry payload data (or other signalling messages).

Referring now to FIG. 2, a trunked radio communications system 200 supporting a TErrestrial Trunked RAdio (TETRA) air-interface is shown in outline. The European Telecommunications Standards Institute (ETSI) has defined the TETRA air interface. Generally, the air-interface protocol is administered from base sites that are geographically spaced apart - one base site supporting a geographical zone/cell or sectors of a cell.

A plurality of subscriber units, such as MSs 212-216 and fixed terminals (not shown), communicate over a selected air-interface 218-220 with a plurality of serving BTSs (base transceiver stations) 222-232. The BTSs 222-232 may be connected to a conventional public-switched telephone network (PSTN) 234 through base station controllers (BSCs) 236-240 and mobile switching centres (MSCs) 242-244. Each BTS 222-232 is principally designed to serve its primary cell, with each BTS 222-232 containing one or more transceivers.

Each BSC 236-240 may control one or more BTSs 222-232, with BSCs 236-240 generally interconnected through MSCs 242-244. Each BSC 236-240 is therefore able to communicate with one another, if desired, to pass system administration information therebetween, with BSCs responsible for establishing and maintaining control channel and traffic channels to serviceable MSs affiliated therewith. The interconnection of BSCs therefore allows the trunked radio communication system to support handover of the MSs between cells. Notably, in the context of the present invention, the BSCs 236-240 have incorporated therein a scheduling function 255 that operates in accordance with an embodiment of the present invention, as described later with reference to FIG. 3.

Each MSC 242-244 provides a gateway to the PSTN 234, with MSCs interconnected through an operations and management centre (OMC) 246, which administers general control of the trunked radio system 200, as will be understood by those skilled in the art. The various system elements, such as BSCs 236-238 and OMC 246, include control logic 248-252, with the various system elements usually having an associated memory element 254 (shown only in relation to BSC 238 for the sake of clarity). The memory element 254 typically stores historically compiled operational data as well as in-call data, system information and control algorithms.

In particular, the scheduling function 255 of the BSC (s) 236-240 has been configured to collect multiple end-of-data messages to be transmitted within one or more timeslot (s) to a number of target MSs in the zone covered by the particular BSC/BTS. When a suitable number of these end-of-data messages have been collected, they are arranged and packed into a selected, or designated, one or more timeslots within the timeslot structure. That is, the respective BSC 236-240 may select which timeslot is used to send the multiple end-of-data messages, according to the prevailing traffic and/or signalling considerations at a particular time. Alternatively, a dedicated timeslot or plurality of timeslots may be used. The MSs recognise that one of the multiple end-of-data messages within the selected/dedicated timeslot is intended for that particular MS, based on the twenty-four bit International Subscriber Station Identity (ISSI) address decoded from the message.

More generally, the adaptation may be implemented in one or more schedulers of one or more respective BSCs 236-240 in any suitable manner. For example, new scheduling apparatus may be added to a conventional BSC 236-240, or alternatively existing parts of a conventional BSC 236-240 may be adapted, for example by reprogramming one or more scheduling processors therein. As such, the required adaptation may be implemented in the form of processor-implementable instructions employed in a microprocessor and stored in a storage medium, such as a floppy disk, hard disk, PROM, RAM or any combination of these or other storage multimedia.

It is also within the contemplation of the invention that such adaptation of scheduling control signaling packet data units may alternatively be controlled, implemented in full or implemented in part by adapting any other suitable part of the communication system 200. For example, the OMC 246 or other elements in the TETRA SwMI (or equivalent parts in other types of systems) may be adapted to provide some or all of the implementation of the scheduler. Alternatively, the a forementioned steps may be carried out by various components distributed at different locations or entities within any suitable network or system.

Referring now to FIG. 3, a timing diagram is shown illustrating a scheduling operation embodying the present invention. The timing diagram illustrates a. sequence 300 of twenty one timeslots 310 in the TETRA TDMA structure. The timeslots 310 may be used to send payload data or control signaling messages, by the BSC 248 for example. Each of a plurality of end-of-data control signalling messages 311 to be transmitted to target MSs by the BSC 248 is placed in a queue by the scheduler 255 (FIG. 2). Instead of sending the messages to the respective MSs one by one in separate available timeslots, the end-of-data messages 311 are collected and delayed by the scheduler 255, until a sufficient number of such messages can be sent as a set. As shown in FIG.3, four of the consecutive timeslots 310 contain two each of the messages 311, i.e making eight messages 311. The unused portions 313 of each of the timeslots 310 in which the messages 311 are contained are therefore smaller than the corresponding portions 113 in FIG. 1. Advantageously, there is therefore reduced usage of the timeslots 310 required to incorporate the messages 311, thereby providing a greater number of free timeslots 310 for use in sending payload data. Compared with thirteen of the twenty one timeslots 110 in FIG. 1 being available for payload data, seventeen of the twenty one of the timeslots 310 in FIG. 3 are available for payload data thereby beneficially providing an increased throughput and reduced delay of the payload data. In some cases, it is possible to pack more than two end-of-data messages into each single timeslot employed for the purpose, thereby increasing the throughput and reducing the delay even further.

The end-of-data message may be sent unacknowledged using a basic link as in the prior art. Thus, in practice, the signalling message may still be sent repeatedly to the MS until an 'acknowledgement' (ack) is returned. However, the message itself, together with any repeat transmissions, is sent less frequently than in known prior art procedures, e.g. as illustrated in FIG. 1, since the first transmission is delayed until a number of messages can be sent together within a particular timeslot or set of timeslots.

It is within the contemplation of the present invention that one or more of a number of procedures may be employed to achieve a delay for sending a multiple end-of-data message in one or more particular timeslot(s) may be implemented.

In a first alternative procedure embodying the present invention, one or more dedicated timeslot(s) is used to achieve a delay prior to sending multiple end-of-data messages. In this regard, the higher layer functions apply, what is effectively, a timeslot/frame mask, limiting the timeslot locations within the timing structure to be used for multiple end-of-data messages.

For example, the TETRA system uses four timeslots per frame, and eighteen frames per multi-frame (equating to approximately one multi-frame per second). Hence, the end-of-data messages may be arranged to be sent in one or more available timeslots in, say, frames 14-17 of each multi-frame. Alternatively, the end-of-data messages may be arranged to be set every n^{th} multi-frame, where n is an integer greater than one, e.g. of every even numbered multi-frame. A skilled artisan will therefore appreciate that many other approaches to using one or more dedicated timeslot(s) may be used. In particular, when two or more control signalling packet data units (PDUs) with similar constraints are generated close together in time, they will tend to be scheduled for transmission at substantially the same time.

The advantage of the dedicated timeslot(s) approach is that no timers need to run in the scheduler. As such, everything is handled by the use of multiple queues, which tends to be more CPU efficient.

In a second alternative procedure embodying the present invention, multiple end-of-data messages can be collected together and sent after a given fixed delay, for example a delay of one second. In the TETRA protocol, such a delay equates to the last sending of such messages in the previous multi-frame. The multiple end-of-data messages will then be sent in the next control timeslot that becomes available to the SwMI after the fixed delay. In this embodiment, although there is a delay involved in the collection and sending of end-of-data messages by the SwMI, the delay is generally acceptable and still yields overall better use of the available resources of the system.

Advantageously, this may be achieved by the respective BSC introducing an adjustable delay on the timing of the control signalling, thereby providing the scheduler with further opportunities to optimise its scheduling operations.

The implementation of the second alternative procedure embodying the invention is preferably achieved by including a time delay. In defining communications systems, an open systems interface (OSI) protocol has been defined by the International Standards Organisation (ISO) which defines a heirarchy of seven operational layers. Layer 1 represents physical connections between devices. Layer 2 represents datalinks between terminals. Layer 3 represents a network layout. The time delay is preferably employed as a layer 3 function.

The scheduler 255 will then be configured to hold the control signalling PDU until either the time delay has been exceeded or where the possibility of packing the PDU with other PDU(s) has arisen. Dependent upon the complexity or loading in the communication system, the scheduler 255 may be required to run multiple timers in this embodiment.

Notwithstanding the aforementioned opportunities to send an end-of-data message with one or more other end-of-data messages in a selected/dedicated timeslot, the end-of-data message must be transmitted when the READY timer expires. In order to increase the probability that the READY timer has expired for more than one MS, the end-of-data message is preferably assigned a 'pack delay' timer.

In this regard, the known use of the READY timer ensures that end-of-data messages are still sent out in a timely manner. However, with the introduction of the additional 'pack delay' timer, multiple end-of-data messages are now sent out more efficiently within one or more timeslot(s) within the overall constraints imposed by the READY timer function.

In operation, where the entity handling layer-2 functions, say a BSC, has not been able to pack the end-of-data message with another message (in TETRA parlance this is termed PDU association), the message is not transmitted. Instead, the "pack delay" timer is started. If another message (or enough messages) arrives before the pack delay timer expires, the pending message and the new message(s) are sent immediately and the timer is stopped. Otherwise, the pending message is sent when the 'pack delay' timer expires.

Because of this latency in transmitting the end-of-data message, there is now a much higher probability that the READY timer has expired for more than one MS. This means that more than one end-of-data message can be packed in each timeslot. Thus, this effectively reduces the number of timeslots used to send the end-of-data messages. This will then, in turn, increase the number of timeslots available for transferring data, and thus increase the capacity of the PDCH.

It will be understood that the scheduling procedure embodying the invention described above tends to provide at least one or more of the following advantages (illustrative of the invention in general):
(i) The number of timeslots used for control signalling will decrease, thereby increasing the number of timeslots available for payload transfer.
(ii) The procedure to use one or more dedicated timeslot(s) allows the scheduler to schedule transmission of multiple end-of-data messages without the need for additional timers. As such, the scheduling is handled by the use of multiple queues, which tends to be more CPU efficient.
(iii) The procedure to use a fixed delay by introducing a controllable delay on the control
   signalling, thereby providing further opportunities for the scheduler to optimise the scheduling.

Whilst specific implementations of the present invention have been described, it is clear that one skilled in the art could readily apply further variations and modifications of such implementations within the scope of the accompanying claims.

Thus, a communication system, a network processor and a method of scheduling end-of-data messages have been provided by the invention that tend to alleviate the disadvantages of such scheduling when carried out according to prior art procedures.

## Claims

1. A wireless communication system (200) adapted to operate according to an operational procedure providing communication channels in timeslots (310) of equal length and providing dedicated channels for packet data communication, the system comprising an infrastructure (210) including a network processor (236, 248) operable to: (i) determine when a packet data communication on a packet data channel has ended; and (ii) generate an end-of-data indication message for sending to a target remote terminal to indicate to the terminal that it should leave the dedicated packet data communication channel; and a scheduler (255) for scheduling sending of the end-of-data indication messages to target remote communication terminals, **characterised in that** the scheduler (255) is operable to control timing of sending of the end-of-data indication messages by collecting and delaying messages until a number of messages are available to be sent as set whereby one or more of the timeslots of the operational procedure incorporate two or more of the collected end-of-data indication messages.

2. A system according to claim 1 including a plurality of remote terminals (212, 214) operable in two or more different communication channels including a packet data communication channel and a system control channel and wherein the remote terminals are operable such that when the end-of-data indication messages are received by the respective remote terminals they trigger an operational function change in the remote terminals such that the terminals leave the packet data communication channel and switch to the system control channel.

3. A system according to claim 1 or claim 2 wherein the system (200) comprises a mobile communications network and the remote terminals comprise mobile stations.

4. A system according to any one of the preceding claims and wherein the network processor (236, 248) is operable such that messages are sent on the data communication channel.

5. A system according to any one of the preceding claims, wherein the scheduler (255) is operable to collect and permit sending of multiple end-of-data indication messages together after a predetermined delay.

6. A system according to Claim 5, wherein the scheduler (255) is operable to hold an end-of-data indication message until either a time delay has exceeded a threshold or the scheduler (255) is able to pack a plurality of the messages within one or more timeslots.

7. A system according to any one of the preceding claims wherein the scheduler (255) is operable to send the end-of-data indication messages in timeslots of selected frames of each multiframe or in selected multiframes.

8. A system according to any one of the preceding claims wherein the end-of-data indication messages are PDU (packet data unit) messages.

9. A system according to any one of the preceding claims wherein the scheduler (255) is operable to apply a delay to the sending of the end-of-data messages which is adjustable.

10. A system according to any one of the preceding claims wherein the processor (236, 248) is operable to detect the end of a packet data communication by measuring a time after the end of a data packet transmission in which no further data packet is detected.

11. A system according to any one of the preceding claims and which is operable according to TETRA standards.

12. A network processor (236) for operation in the infrastructure (210) of a system (200) adapted to operate according to an operational procedure providing communication channels in timeslots of equal length and providing dedicated channels for packet data communication, the network processor being operable to: (i) determine when a packet data communication on a packet data channel has ended by measuring a time after the end of a data packet transmission in which no further data packet is detected; and (ii) generate an end-of-data indication message for sending to a target remote terminal (212) to indicate to the terminal that it should leave the dedicated packet data communication channel; and including a scheduler (255) for scheduling sending of the end-of-data indication messages to target remote communication terminals, **characterised in that** the scheduler (255) is operable to control timing of sending of the end-of-data indication messages by collecting and delaying messages until a number of messages are available to be sent as set whereby one or more of the timeslots of the operational procedure incorporate two or more of the collected end-of-data indication messages.

13. A method (300) of operation in a system (200) which is adapted to operate according to an operational procedure providing communication channels in timeslots (310) of equal length and providing dedicated channels for packet data communication, the method comprising a network processor (236, 248) of an infrastructure (210) of the system: (i) determining when a packet data communication on a packet data channel has ended by measuring a time after the end of a data packet transmission in which no further data packet is detected; (ii) generating an end-of-data indication message for sending to a target remote terminal to indicate to the terminal that it should leave the dedicated packet data communication channel; and scheduling sending of the end-of-data indication messages to target remote communication terminals, **characterised in that** the scheduling is by a scheduler (255) which controls timing of sending of the end-of-data indication messages by collecting and delaying messages until a number of messages are available to be sent as set whereby one or more of the timeslots of the operational procedure incorporate two or more of the collected end-of-data indication messages.

14. A storage medium storing processor-implementable instructions for controlling a processor to carry out the method according to claim 13.

## Patentansprüche

1. System zur drahtlosen Kommunikation (200), das dazu geeignet ist, gemäß einem Arbeitsablauf zu arbeiten, der Kommunikationskanäle in Zeitslots (310) gleicher Länge bereitstellt und der Paketdatenkommunikation zugeordnete Kanäle bereitstellt, das System umfasst eine Infrastruktur (210) einschließlich eines Netzwerkprozessors (236, 248) zum: (i) Bestimmen wann eine Paketdatenkommunikation auf einem Paketdatenkanal geendet hat; und (ii) Erzeugen einer Datenendmarkierungsnachricht zum Senden an ein entferntes Ziel-Endgerät, um dem Endgerät anzuzeigen, dass es den zugeordneten Paketdatenkommunikationskanal verlassen soll; und einen Planer (255) zum Planen des Sendens der Datenendmarkierungsnachrichten zu entfernten Ziel-Kommunikationsendgeräten, **dadurch gekennzeichnet, dass** der Planer (255) geeignet ist, das Timing des Sendens der Datenendmarkierungsnachrichten durch das Sammeln und das Verzögern von Nachrichten bis eine Anzahl von Nachrichten verfügbar ist, die als Satz gesendet werden können, zu steuern, wobei einer oder mehrere der Zeitslots des Arbeitsablaufs zwei oder mehr der gesammelten Datenendmarkierungsnachrichten umfassen.

2. System gemäß Anspruch 1, umfassend eine Vielzahl von entfernten Endgeräten (212, 214) betreibbar in zwei oder mehr verschiedenen Kommunikationskanälen, die einen Paketdatenkommunikationskanal und einen Systemkontrollkanal umfassen, wobei die entfernten Endgeräte derart betreibbar sind, dass, wenn die Datenendmarkierungsnachrichten von den jeweiligen entfernten Endgeräten empfangen werden, diese einen Betriebsfunktionswechsel in den entfernten Endgeräten triggern, so dass die Endgeräte den Paketdatenkommunikationskanal verlassen und zu dem Systemkontrollkanal wechseln.

3. System gemäß Anspruch 1 oder Anspruch 2, wobei das System (200) ein mobiles Kommunikationsnetzwerk umfasst und die entfernten Endgeräte mobile Stationen umfassen.

4. System gemäß einem der vorhergehenden Ansprüche, wobei der Netzwerkprozessor (236, 248) dazu geeignet ist, Nachrichten auf dem Datenkommunikationskanal zu senden.

5. System gemäß einem der vorhergehenden Ansprüche, wobei der Planer (255) geeignet ist, Datenendmarkierungsnachrichten zu sammeln und ein gemeinsames Senden nach einer vorherbestimmten Verzögerung zu erlauben.

6. System gemäß Anspruch 5, wobei der Planer (255) geeignet ist, eine Datenendmarkierungsnachricht anzuhalten, bis entweder eine Zeitverzögerung eine Schwelle überschritten hat oder der Planer (255) in der Lage ist, eine Vielzahl der Nachrichten in einen oder mehrere Zeitslots zu packen.

7. System gemäß einem der vorhergehenden Ansprüche, wobei der Planer (255) geeignet ist, die Datenendmarkierungsnachrichten in Zeitslots ausgewählter Frames von jedem Multiframe oder von ausgewählten Multiframes zu senden.

8. System gemäß einem der vorhergehenden Ansprüche, wobei die Datenendmarkierungsnachrichten PDU (Packet Data Unit) Nachrichten sind.

9. System gemäß einem der vorhergehenden Ansprüche, wobei der Planer (255) geeignet ist, auf das Senden der Datenendmarkierungsnachrichten eine einstellbare Verzögerung anzuwenden.

10. System gemäß einem der vorhergehenden Ansprüche, wobei der Prozessor (236, 248) dazu geeignet ist, das Ende der Paketdatenkommunikation durch Messen einer Zeit nach dem Ende einer Datenpaketübermittlung, in welcher kein weiteres Datenpaket festgestellt wird, festzustellen.

11. System gemäß einem der vorhergehenden Ansprüche, wobei das System gemäß dem TETRA Standard betreibbar ist.

12. Netzwerkprozessor (236) geeignet zum Arbeiten in einer Infrastruktur (210) eines Sytems (200), das dazu geeignet ist, gemäß einem Arbeitsablauf zu arbeiten, der Kommunikationskanäle in Zeitslots (310) gleicher Länge bereitstellt und der Paketdatenkommunikation zugeordnete Kanäle bereitstellt, wobei der Netzwerkprozessor dazu geeignet ist: (i) Durch Messen einer Zeit nach dem Ende einer Datenpaketübermittlung, in welcher kein weiteres Datenpaket festgestellt wird, zu bestimmen wann eine Paketdatenkommunikation auf einem Paketdatenkanal geendet hat; und (ii) Eine Datenendmarkierungsnachricht zum Senden an ein entferntes Ziel-Endgerät (212) zu erzeugen, um dem Endgerät anzuzeigen, dass es den zugeordneten Paketdatenkommunikationskanal verlassen soll; und einen Planer (255) zum Planen des Sendens der Datenendmarkierungsnachrichten zu entfernten Ziel-Kommunikationsendgeräten umfasst, **dadurch gekennzeichnet, dass** der Planer (255) geeignet ist, das Timing des Sendens der Datenendmarkierungsnachrichten durch das Sammeln und das Verzögern von Nachrichten bis eine Anzahl von Nachrichten verfügbar ist, die als Satz gesendet werden können, zu steuern, wobei einer oder mehrere der Zeitslots des Arbeitsablaufs zwei oder mehr der gesammelten Datenendmarkierungsnachrichten umfassen.

13. Verfahren (300) zum Betreiben eines Systems (200), welches dazu geeignet ist, gemäß einem Arbeitsablauf zu arbeiten, der Kommunikationskanäle in Zeitslots (310) gleicher Länge bereitstellt und der Paketdatenkommunikation zugeordnete Kanäle bereitstellt, wobei das Verfahren einen Netzwerkprozessor (236, 248) einer Infrastruktur (210) des Systems umfasst, der: (i) Durch Messen einer Zeit nach dem Ende einer Datenpaketübermittlung, in welcher kein weiteres Datenpaket festgestellt wird, bestimmt, wann eine Paketdatenkommunikation auf einem Paketdatenkanal geendet hat; (ii) Eine Datenendmarkierungsnachricht zum Senden an ein entferntes Ziel-Endgerät erzeugt, um dem Endgerät anzuzeigen, dass es den zugeordneten Paketdatenkommunikationskanal verlassen soll; und das Senden der Datenendmarkierungsnachrichten zu entfernten Ziel-Kommunikationsendgeräten plant, **dadurch gekennzeichnet, dass** das Planen durch einen Planer (255) erfolgt, der das Timing des Sendens der Datenendmarkierungsnachrichten durch das Sammeln und das Verzögern von Nachrichten bis eine Anzahl von Nachrichten verfügbar ist, die als Satz gesendet werden können, steuert, wobei einer oder mehrere der Zeitslots des Arbeitsablaufs zwei oder mehr der gesammelten Datenendmarkierungsnachrichten umfassen.

14. Speichermedium prozessor-implementierbare Instruktionen zum Steuern eines Prozessors speichernd, um das Verfahren gemäß Anspruch 13 auszuführen.

## Revendications

1. Système de communication sans fil (200) adapté pour fonctionner selon une procédure opérationnelle fournissant des canaux de communication pendant des intervalles de temps (310) de longueur égale et fournissant des canaux dédiés pour une communication de données en paquets, le système comportant une infrastructure (210) comprenant un processeur de réseau (236, 248) permettant de:
(i) déterminer lorsqu'une communication de données en paquets sur un canal de données en paquets est terminée ; et
(ii) générer un message d'indication de fin de données à envoyer à un terminal éloigné cible pour indiquer au terminal qu'il doit quitter le canal dédié de communication de données en paquets ; et un programmateur (255) pour planifier l'envoi de messages d'indication de fin de données à des terminaux de communication éloignés cibles, **caractérisé en ce que** le programmateur (255) peut contrôler la synchronisation d'envoi des messages d'indication de fin de données en collectant et en retardant les messages jusqu'à ce qu'un nombre de messages soit disponible à envoyer tels quels moyennant quoi un ou plusieurs des intervalles de temps de la procédure opérationnelle incorporent deux ou plusieurs des messages d'indication de fin de données collectés.

2. Système selon la revendication 1, comprenant une pluralité de terminaux éloignés (212, 214) pouvant fonctionner avec deux ou plusieurs canaux de communication différents comprenant un canal de communication de données en paquets et un canal de contrôle de système et dans lequel les terminaux éloignés peuvent fonctionner de sorte que lorsque des messages d'indication de fin de données sont reçus par les terminaux éloignés respectifs, ils déclenchent un changement de fonction opérationnelle dans les terminaux éloignés de sorte que les terminaux quittent le canal de communication de données en paquets et commutent vers le canal de contrôle de système.

3. Système selon la revendication 1 ou la revendication 2, dans lequel le système (200) comporte un réseau de communications mobiles et les terminaux éloignés comportent des stations mobiles.

4. Système selon l'une quelconque des revendications précédentes, dans lequel le processeur de réseau (236, 248) peut fonctionner de sorte que des messages sont envoyés sur le canal de communication de données.

5. Système selon l'une quelconque des revendications précédentes, dans lequel le programmateur (255) peut collecter et permettre l'envoi de multiples messages d'indication de fin de données conjointement après un retard prédéterminé.

6. Système selon la revendication 5, dans lequel le programmateur (255) peut conserver un message d'indication de fin de données jusqu'à ce que soit un retard ait dépassé un seuil soit le programmateur (255) peut compresser une pluralité de messages pendant un ou plusieurs intervalles de temps.

7. Système selon l'une quelconque des revendications précédentes, dans lequel le programmateur (255) peut envoyer des messages d'indication de fin de données pendant des intervalles de temps de trames sélectionnées de chaque trame multiple ou pendant des trames multiples sélectionnées.

8. Système selon l'une quelconque des revendications précédentes, dans lequel les messages d'indication de fin de données sont des messages PDU (unité de données en paquets).

9. Système selon l'une quelconque des revendications précédentes, dans lequel le programmateur (255) peut appliquer un retard, qui peut être réglé, à l'envoi de messages de fin de données.

10. Système selon l'une quelconque des revendications précédentes, dans lequel le processeur (236, 248) peut détecter la fin d'une communication de données en paquets en mesurant un temps après la fin d'une transmission de paquets de données dans lequel aucun autre paquet de données n'est détecté.

11. Système selon l'une quelconque des revendications précédentes, qui peut fonctionner selon des standards TETRA.

12. Processeur de réseau (236) pour un fonctionnement dans l'infrastructure (210) d'un système (200) adapté pour fonctionner selon une procédure opérationnelle fournissant des canaux de communication pendant des intervalles de temps d'égale longueur et fournissant des canaux dédiés pour une communication de données en paquets, le processeur de réseau permettant de : (i) déterminer lorsqu'une communication de données en paquets sur un canal de données en paquets est terminée en mesurant un temps après la fin d'une transmission de paquets de données dans lequel aucun autre paquet de données n'est détecté ; et (ii) générer un message d'indication de fin de données pour l'envoi à un terminal éloigné cible (212) afin d'indiquer au terminal qu'il doit quitter le canal dédié de communication de données en paquets ; et comprenant un programmateur (255) pour planifier l'envoi des messages d'indication de fin de données aux terminaux de communication éloignés cibles, **caractérisé en ce que** le programmateur (255) permet de contrôler la synchronisation de l'envoi des messages d'indication de fin de données en collectant et en retardant des messages jusqu'à ce qu'un nombre de messages soit disponible à envoyer tels quels moyennant quoi un ou plusieurs des intervalles de temps de la procédure opérationnelle incorporent deux ou plusieurs des messages d'indication de fin de données collectés.

13. Procédé de fonctionnement (300) dans un système (200) qui est adapté pour fonctionner selon une procédure opérationnelle fournissant des canaux de communication pendant des intervalles de temps (310) d'égale longueur et fournissant des canaux dédiés pour une communication de données en paquets, le procédé comportant un processeur de réseau (236, 248) d'une infrastructure (210) du système :
(i) déterminant lorsqu'une communication de données en paquets sur un canal de données en paquets est terminée en mesurant un temps après la fin d'une transmission de paquets de données dans lequel aucun autre paquet de données n'est détecté ; (ii) générer un message d'indication de fin de données pour un envoi vers un terminal éloigné cible afin d'indiquer au terminal qu'il doit quitter le canal dédié de communication de données en paquets ; et planifiant l'envoi des messages d'indication de fin de données aux terminaux de communication éloignés cibles, **caractérisé en ce que** la planification est effectuée par un programmateur (255) qui contrôle la synchronisation de l'envoi des messages d'indication de fin de données en collectant et en retardant des messages jusqu'à ce qu'un nombre de messages soit disponible à envoyer tels quels moyennant quoi un ou plusieurs des intervalles de temps de la procédure opérationnelle incorporent deux ou plusieurs des messages d'indication de fin de données collectés.

14. Support de stockage mémorisant des instructions pouvant être effectuées par un processeur pour contrôler un processeur afin d'effectuer le procédé selon la revendication 13.
